# EUROPEAN PATENT SPECIFICATION

(11) **EP 3 094 605 B1**
(45) Date of publication and mention of the grant of the patent: **30.01.2019**
(21) Application number: 15792043.0
(22) Date of filing: 14.05.2015
(51) Int. Cl.: C03B 27/044, C03B 27/04

(54) **TEMPERING AND COOLING METHOD FOR A TEMPERED GLASS**
TEMPERIERUNGS- UND KÜHLVERFAHREN FÜR EIN VORGESPANNTES GLAS
MÉTHODE DE TREMPE ET DE REFROIDISSEMENT POUR UN VERRE TREMPÉ

(30) Priority: 15.05.2014 CN 201410205432
(43) Date of publication of application: 23.11.2016
(73) Proprietor: Luoyang Landglass Technology Co., Ltd., Henan 471000 (CN)
(72) Inventor: ZHAO, Yan, Luoyang Henan 471000 (CN); JIANG, Chunwei, Luoyang Henan 471000 (CN); SHAO, Maidun, Luoyang Henan 471000 (CN)
(74) Representative: Grünecker Patent- und Rechtsanwälte PartG mbB
(86) International application number: PCT/CN2015/078935
(87) International publication number: WO 2015/172723

(56) References cited:
- EP-B1- 2 141 132
- CN-A- 1 975 619
- CN-U- 201 817 379
- US-A- 3 226 215
- US-A- 3 226 215
- US-A- 3 264 079
- US-A- 3 849 099
- US-A- 4 201 563
- US-A- 5 236 488
- US-A1- 2014 007 620
- US-B2- 6 796 144
- US-B2- 8 074 473

## Description

### Technical Field

The present invention relates to a tempering and cooling method for tempered glass with a tempering and cooling system which uses chillers to firstly temper a high-temperature glass plate and then cool the glass plate after tempering.

### Background Art

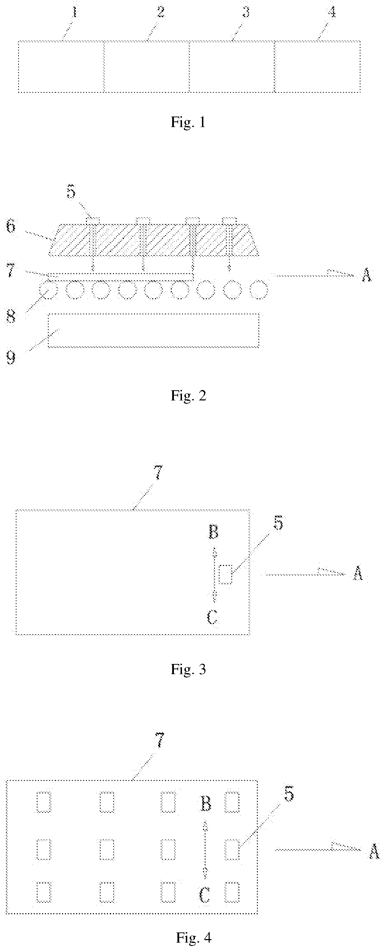

At present, as shown in Fig. 1, a tempered glass production line mainly includes a loading table 1, a heating furnace 2, a quenching and cooling section 3 and an unloading table 4. A glass plate is transferred by roller tables to sequentially pass through the four working positions abovementioned to complete processing, wherein the glass plate is conveyed on the loading table 1; the glass plate after loading enters the heating furnace 2, and the glass plate is heated by the heating furnace 2; the glass plate after heating is sent to the quenching and cooling section 3 to complete tempering and cooling steps, the surface of the glass plate is firstly subjected to air blowing to rapidly reduce the temperature for realizing tempering, and after the temperature of the glass plate drops to the temperature of a tempering point, the glass plate is further cooled to achieve the temperature of a cooling point; and the glass plate after cooling is unloaded on the unloading table 4. In a tempering process, the air pressure is relatively high, the rotational speed of a fan is relatively fast, the energy consumption is high and the noise is also high. After the glass plate enters a cooling process, the air pressure during tempering can be used continuously to facilitate the operation. However, the fan always keeps high rotational speed and high energy consumption, thereby producing relatively great waste of energy, affecting the working condition of the fan and reducing the service life. Or, after the glass plate enters the cooling process, the relatively low air pressure is adopted and the rotational speed of the fan is reduced. Although the method is complicated in procedure, the energy consumption can be reduced, and the working condition of the fan can be improved to a certain extent.

The glass plate always takes the time as control reference in the tempering and cooling section 3 regardless of the tempering process or the cooling process, namely the time for completing tempering or cooling of the glass plate is estimated by multiplying the thickness of the glass plate by a time base. The processing method is obtained by summarization according to experience. In order to prevent the problem that the quality of a finished product of the glass plate is affected by insufficient tempering or cooling time, the tempering time or the cooling time is generally prolonged, namely after the glass plate achieves the temperature of the tempering point or the temperature of the cooling point, tempering or cooling is continuously performed. In such a way, although the quality of the finished product of the glass plate can be ensured, the waste of energy is caused; and when the glass plate with a different specification is processed, the tempering time and the cooling time need to be re-estimated, so that the process becomes complex and errors are easy to cause, and the mass production of tempered glass is further adversely affected.

A tempering method for tempered glass is known from US 6,796,144 B2, wherein a tempering system is arranged on a quenching station of a tempered glass production line. The quenching station comprises rollers, chillers, a glass plate arranged on the rollers, and a temperature sensor. The sensor is configured to be operational to sense the temperature profile in sheet during the quenching operation. The US 6,796,144 B2 relates only to control of the tempering process based on the sensed temperature, but not to the cooling process.

A method of toughening at least a part of a glass article is known from US 3,226,215 A. The method comprises heating the glass article above the relaxation temperature of the glass, exposing the heated glass article to the quenching action of a gaseous chilling medium having a gas pressure directed at a surface of the glass article until said surface is chilled to a controlled, fixed temperature, sensing the temperature of said glass surface while it is being chilled by said chilling medium with a second gas pressure less than the first gas pressure, and as soon as the glass surface has been chilled to said controlled temperature stopping the delivery of the gaseous chilling medium. According to this method, the air pressure is adjusted at a fixed temperature of the glass.

A process of tempering glass sheets is further known from US 3,264,079 A by first heating the glass sheets in a relatively hot atmosphere to an elevated temperature sufficient for tempering and suddenly quenching the heated glass sheets with a chilling fluid in a relatively cold atmosphere for sufficient time to impart a temper thereto under normal operating conditions, wherein after sensing the temperature, with the use of a pyrometer, of each said treated glass sheets at the end of said time to determine whether the glass has been properly tempered, then the cooling of said sheet to room temperature takes place.

In order to reduce the production energy consumption and improve the quality of the finished product of the glass plate, the applicant improves the tempering and cooling method of the tempered glass production line after long-term test, improvement, research and development.

It should be noted that:
1. The temperature of the tempering point of the glass plate refers to the temperature value which is 50-250°C lower than the temperature of a strain point of the glass plate (the temperature forming permanent stress of the glass plate).
2. The temperature of the cooling point of the glass plate refers to the temperature value of the glass plate, which is cooled to room temperature (+0-50°C) after the tempering process.
3. The temperature of the strain point of the glass plate is equivalent to the temperature when the viscosity is 10^{13.6} poises, and the temperature of the strain point of an ordinary flat glass plate is 510-520°C. At the temperature, the glass plate does not produce viscous flow, and the internal stress of the glass plate can be substantially eliminated by performing heat insulation for 4h.

### Invention Contents

To solve the problems in the prior art, the present invention provides a tempering and cooling method for tempered glass according to claim 1.

Further, one or at least two temperature sensors are equipped above and/or below the roller tables, and the time when the tempering stage is ended and the time when the cooling stage of the glass plate is ended are determined according to the maximum value of the temperature detected by all the temperature sensors every time.

Further, the temperature sensor is an oscillating-type temperature sensor, and the temperature sensor is used for scanning the surface of the glass plate by oscillating during working to collect the surface temperature of the glass plate in a glass plate region covered by a scanning range.

Further, the temperature sensor can be mounted in the tempering and cooling section in a way of performing reciprocating movement parallel to the surface of the glass plate and is used for scanning the surface of the glass plate by reciprocating movement during working to collect the surface temperature of the glass plate in a glass plate region covered by a scanning range.

Further, the temperature sensor is mounted on the chillers.

Further, the temperature sensor is an infrared temperature measurement unit.

The present invention has the advantages that, the limited thinking of a traditional process is broken, the surface temperature of the glass plate is collected by using the temperature sensor, and the tempering and the cooling processes are controlled according to the surface temperature of the glass plate, thereby enabling the time used for tempering or cooling of the glass plate to be more precious, not only reducing the energy consumption in the production process of the tempered glass, but also improving the quality of finished tempered glass and facilitating mass production.

### Brief Description of the Drawings

Fig. 1 is a schematic diagram of an existing tempered glass production line;
Fig. 2 is a schematic diagram of the structure of a tempering and cooling system in the present invention;
Fig. 3 is a schematic diagram of one temperature sensor equipped in the present invention;
Fig. 4 is a schematic diagram of a plurality of temperature sensors equipped in the present invention;
Fig. 5 is a schematic diagram of oscillating of a temperature sensor around a set axis in the present invention; and
Fig. 6 is a schematic diagram of movement of a temperature sensor along a set path in the present invention.

### Detailed Description

In conjunction with the accompanying drawings, the specific embodiments of the present invention are described below in detail.

As shown in Fig. 2, a tempering and cooling system for tempered glass of the present invention is arranged in a quenching and cooling section of a tempered glass production line and specifically includes roller tables 8 for connecting a glass plate heating furnace 2 and an unloading table 4 (see Fig. 1), wherein a glass plate 7 is arranged on the roller tables 8, the glass plate 7 is sent to the unloading table 4 by the roller tables 8 along an arrow A in the figure, an upper wind grating 6 is arranged above the glass plate 7, a lower wind grating 9 is arranged below the glass plate 7, and the upper wind grating 6 and the lower wind grating 9 are in one-to-one correspondence. Temperature sensors 5 are arranged above the glass plate 7, the temperature sensors 5 are mounted at the top of the upper wind grating 6 and is used for collecting the temperature of the upper surface of the glass plate 7, and the temperature sensor 5 is preferably an infrared temperature measurement unit.

As shown in Fig. 3, the glass plate 7 moves along the A direction, one temperature sensor 5 is arranged above the glass plate 7, the temperature sensor 5 is used for collecting the temperature of the glass plate along the B-C direction, and the B-C direction is vertical to the motion direction A of the glass plate 7.

As shown in Fig. 4, the glass plate 7 moves along the A direction, a plurality of temperature sensors 5 are arranged above the glass plate 7, wherein 12 temperature sensors 5 are specifically equipped in the figure. The temperature sensors 5 are arranged in a matrix mode, and are used for collecting the temperature of the glass plate along the B-C direction which is vertical to the motion A direction of the glass plate 7.

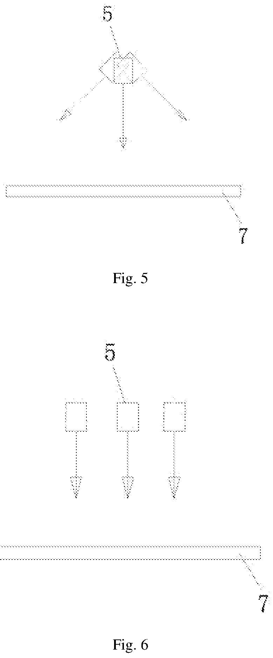

As shown in Fig. 5, the temperature sensor 5 is an oscillating-type temperature sensor, and the temperature sensor is used for scanning the surface of the glass plate by oscillating around a set axis during working to collect the surface temperature of the glass plate 7 in a glass plate region covered by a scanning range.

As shown in Fig. 6, the temperature sensor 5 may be mounted in the quenching and cooling section in a way of performing reciprocating movement parallel to the surface of the glass plate and is used for scanning the surface of the glass plate 7 by reciprocating movement during working to collect the surface temperature of the glass plate 7 in a glass plate region covered by a scanning range.

The temperature sensor 5 may be arranged above the glass plate 7 as shown in Figs. 2-6, and of course, may also be arranged below the glass plate 7 (not shown); or the temperature sensors 5 are arranged above and below the glass plate 7 (not shown).

### Embodiment 1

By referring to Figs. 1, 2, 4 and 5, a glass plate 7 sequentially passes through a loading table 1 and a heating furnace 2 and enters a quenching and cooling section 3, and then the glass plate 7 performs single-way motion towards an unloading table 4 on roller tables 8, namely moves along the A direction. In a tempering stage, an upper wind grating 6 and a lower wind grating 9 produce relatively large air pressure to rapidly cool and temper the glass plate 7, 12 temperature sensors 5 are distributed above the glass plate 7 in a matrix mode, each temperature sensor 5 is used for collecting the temperature of the upper surface of the glass plate 7 by continuous oscillating as shown in Fig. 5, after the temperature of the upper surface of the glass plate 7 is collected every time, the maximum value of the collected temperature is compared with the temperature of a tempering point required by the process, and if the temperature drops to the temperature of the tempering point, the glass plates enters a cooling stage; and after the glass plate enters the cooling stage, the air pressure in the tempering stage can be continuously kept, the air pressure can also be reduced, the temperature sensors 5 are continuously used for detecting the temperature of the upper surface of the glass plate 7, after the temperature of the upper surface of the glass plate 7 is collected every time, whether the cooling process is completed or not is judged according to the maximum value of the collected temperature, and if the temperature drops to the temperature of a cooling point, it means that the whole cooling process is completed, then the cooling is stopped and the glass plate 7 is sent to the unloading table 4 by the roller tables 8.

### Embodiment 2

Referring to Figs. 1, 3 and 6, embodiment 2 is basically the same as embodiment 1, and the differences are as follows: in the whole cooling process, the glass plate 7 performs reciprocating motion on the roller tables 8, one temperature sensor 5 is equipped above the glass plate 7, and the temperature sensor 5 may be mounted in a quenching and cooling section in a way of performing reciprocating movement parallel to the surface of the glass plate, as shown in Fig. 6. In Fig. 6, specifically, the temperature sensor 5 can perform continuous reciprocating movement along the direction vertical to the traveling direction of the glass plate 7 to scan the surface of the glass plate, thereby collecting the surface temperature of the glass plate in a glass plate region covered by a scanning range.

### Embodiment 3

| Serial number | Thinkness of glass plate (mm) | Tempering air pressure (Pa) | Set temperature of tempering point (°C) | Cooling air pressure(Pa ) | Set temperature of cooling point (°C) |
|---|---|---|---|---|---|
| Sample 1 | 4 | 7500 | 380 | 2000 | 60 |
| Sample 2 | 5 | 3200 | 380 | 1500 | 60 |
| Sample 3 | 6 | 1800 | 380 | 1600 | 60 |
| Sample 4 | 8 | 750 | 380 | 1600 | 60 |
| Sample 5 | 10 | 600 | 380 | 1600 | 60 |
| Sample 6 | 12 | 400 | 380 | 1500 | 60 |
| Sample 7 | 15 | 200 | 380 | 1500 | 60 |
| Sample 8 | 19 | 200 | 380 | 1500 | 60 |

In the embodiment, the glass plates with 8 different thicknesses are respectively tempered by tempering air pressures with 8 different strengths in the tempering stage, and when the temperature sensor detects that the temperature of the upper surface of each glass plate achieves the temperature of the tempering point, i.e. 380°C, the glass plates enter the cooling stage; and in the cooling stage, the glass plates are cooled by cooling air pressures with different strengths, and when the temperature sensor detects that the temperature of the upper surface of each glass plate drops to the temperature of the cooling point, i.e. 60°C, the cooling is stopped, and the glass plates are sent to the unloading table.

The above examples are only used for describing the present invention, and the embodiments of the present invention are not limited to these examples. Various specific embodiments which are made by those skilled in the art and are in line with the thinking of the present invention are within the scope of protection of the present invention.

## Claims

1. A tempering and cooling method for tempered glass with a tempering and cooling system, whereby the tempering and cooling system is arranged on a tempering and cooling section (3) of a tempered glass production line (1, 2, 3, 4), wherein the tempering and cooling section (3) comprises roller tables (8) and chillers, a glass plate (7) is arranged on the roller tables (8), a temperature sensor (5) for collecting surface temperature of the glass plate (7) is arranged above and/or below the roller tables (8), and a tempering process of the glass plate (7) is controlled according to the surface temperature of the glass plate (7) detected by the temperature sensor (5); **characterized in that** a cooling process of the glass plate (7) is also controlled according to the surface temperature of the glass plate (7) detected by the temperature sensor (5); in a tempering stage of the glass plate (7) with a higher air pressure, when the surface temperature of the glass plate (7) drops to the temperature of a tempering point, which is 50°C -250°C lower than the temperature of a strain point of the glass plate (7), the glass plate (7) enters a cooling stage with a lower air pressure; and in the cooling stage of the glass plate (7), when the surface temperature of the glass plate (7) drops to the temperature of a cooling point, the cooling is stopped.

2. The tempering and cooling method according to claim 1, **characterized in that** one or at least two temperature sensors (5) are equipped above and/or below the roller tables (8), and the time when the tempering stage is ended and the time when the cooling stage of the glass plate (7) is ended are determined according to the maximum value of the temperature detected by all the temperature sensors (5) every time.

3. The tempering and cooling method according to claim 1, **characterized in that** the temperature sensor is an oscillating-type temperature sensor (5), and the temperature sensor (5) is used for scanning the surface of the glass plate (7) by oscillating during working to collect the surface temperature of the glass plate (7) in a glass plate region covered by a scanning range.

4. The tempering and cooling method according to claim 1, **characterized in that** the temperature sensor (5) can be mounted in the tempering and cooling section (3) in a way of performing reciprocating movement parallel to the surface of the glass plate (7) and is used for scanning the surface of the glass plate (7) by reciprocating movement during working to collect the surface temperature of the glass plate (7) in a glass plate region covered by a scanning range.

5. The tempering and cooling method according to claim 1, **characterized in that** the temperature sensor (5) is mounted on the chillers.

6. The tempering and cooling method according to claim 1, **characterized in that** the temperature sensor (5) is an infrared temperature measurement unit.

## Patentansprüche

1. Temperierungs- und Kühlverfahren für ein temperiertes Glas in einem Temperierungs- und Kühlsystem, wobei das Temperierungs- und Kühlsystem an einem Temperierungs- und Kühlabschnitt (3) einer Produktionslinie (1, 2, 3, 4) für temperiertes Glas angeordnet ist und wobei der Temperierungs- und Kühlabschnitt (3) Rolltische (8) und Kühler umfasst, wobei eine Glasplatte (7) auf den Rolltischen (8) angeordnet ist, wobei ein Temperatursensor (5) für das Erfassen der Oberflächentemperatur der Glasplatte (7) oberhalb und/oder unterhalb der Rolltische (8) angeordnet ist und wobei ein Temperierungsprozess der Glasplatte (7) in Entsprechung zu der durch den Temperatursensor (5) erfassten Oberflächentemperatur der Glasplatte (7) gesteuert wird, **dadurch gekennzeichnet, dass** ein Kühlprozess der Glasplatte (7) ebenfalls in Entsprechung zu der durch den Temperatursensor (5) erfassten Oberflächentemperatur der Glasplatte (7) gesteuert wird, wobei in einer Temperierungsphase der Glasplatte (7) mit einem höheren Luftdruck, wenn die Oberflächentemperatur der Glasplatte (7) zu der Temperatur eines Temperierungspunkts fällt, der 50°C bis 250°C niedriger als die Temperatur eines unteren Kühlpunkts der Glasplatte (7) ist, die Glasplatte (7) in eine Kühlphase mit einem niedrigeren Luftdruck eintritt, und wobei in der Kühlphase der Glasplatte (7), wenn die Oberflächentemperatur der Glasplatte (7) zu der Temperatur eines Kühlpunkts fällt, das Kühlen gestoppt wird.

2. Temperierungs- und Kühlverfahren nach Anspruch 1, **dadurch gekennzeichnet, dass** einer oder wenigstens zwei Temperatursensoren (5) oberhalb und/oder unterhalb der Rolltische (8) vorgesehen sind, wobei die Zeit, zu der die Temperierungsphase beendet wird, und die Zeit, zu der die Kühlphase der Glasplatte (7) beendet wird, jedesmal in Entsprechung zu dem maximalen Wert der durch alle Temperatursensoren (5) erfassten Temperatur bestimmt werden.

3. Temperierungs- und Kühlverfahren nach Anspruch 1, **dadurch gekennzeichnet, dass** der Temperatursensor ein Temperatursensor (5) des oszillierenden Typs ist, wobei der Temperatursensor (5) für das Abtasten der Oberfläche der Glasplatte (7) durch ein Oszillieren während der Verarbeitung verwendet wird, um die Oberflächentemperatur der Glasplatte (7) in einem durch einen Abtastbereich abgedeckten Glasplattenbereich zu erfassen.

4. Temperierungs- und Kühlverfahren nach Anspruch 1, **dadurch gekennzeichnet, dass** der Temperatursensor (5) in dem Temperierungs- und Kühlabschnitt (3) in einem Weg für das Durchführen einer Hin- und Herbewegung parallel zu der Oberfläche der Glasplatte (7) montiert sein kann und für das Abtasten der Oberfläche der Glasplatte (7) durch eine Hin- und Herbewegung während der Verarbeitung verwendet wird, um die Oberflächentemperatur der Glasplatte (7) in einem durch einen Abtastbereich abgedeckten Glasplattenbereich zu erfassen.

5. Temperierungs- und Kühlverfahren nach Anspruch 1, **dadurch gekennzeichnet, dass** der Temperatursensor (5) an den Kühlern montiert ist.

6. Temperierungs- und Kühlverfahren nach Anspruch 1, **dadurch gekennzeichnet, dass** der Temperatursensor (5) eine Infrarot-Temperaturmesseinheit ist.

## Revendications

1. Procédé de trempe et de refroidissement d'un verre trempé avec un système de trempe et de refroidissement, dans lequel le système le trempe et de refroidissement est disposé sur une section de trempe et de refroidissement (3) d'une ligne de production de verre trempé (1, 2, 3, 4), dans lequel la section de trempe et de refroidissement (3) comprend des trains de rouleaux (8) et des refroidisseurs, une plaque de verre (7) est agencée sur les trains de rouleaux (8), un capteur de température (5) pour recueillir la température de surface de la plaque de verre (7) est agencé au-dessus et/ou au-dessous des trains de rouleaux (8) et une opération de trempe de la plaque de verre (7) est commandée en fonction de la température de surface de la plaque de verre (7) détectée par le capteur de température (5) ; **caractérisé en ce qu'**une opération de refroidissement de la plaque de verre (7) est également commandée en fonction de la température de surface de la plaque de verre (7) détectée par le capteur de température (5) ; lors d'une étape de trempe de la plaque de verre (7) avec une pression d'air supérieure, lorsque la température de surface de la plaque de verre (7) chute à la température d'un point de trempe, qui est inférieur de 50 °C à 250 °C à la température d'un point de formation de contrainte permanente de la plaque de verre (7), la plaque de verre (7) entre dans une étape de refroidissement avec une pression d'air inférieure ; et lors de l'étape de refroidissement de la plaque de verre (7), lorsque la température de surface de la plaque de verre (7) chute à la température d'un point de refroidissement, le refroidissement est stoppé.

2. Procédé de trempe et de refroidissement selon la revendication 1, **caractérisé en ce qu'**un ou au moins deux capteurs de température (5) sont placés au-dessus et/ou au-dessous des trains de rouleaux (8), et le moment où l'étape de trempe est terminée et le moment où l'étape de refroidissement de la plaque de verre (7) est terminée sont déterminés en fonction de la valeur maximale de la température détectée par tous les capteurs de température (5) à chaque moment.

3. Procédé de trempe et de refroidissement selon la revendication 1, **caractérisé en ce que** le capteur de température est un capteur de température (5) de type oscillant, et le capteur de température (5) est utilisé pour balayer la surface de la plaque de verre (7) en oscillant pendant le fonctionnement afin de recueillir la température de surface de la plaque de verre (7) dans une région de la plaque de verre couverte par une plage de balayage.

4. Procédé de trempe et de refroidissement selon la revendication 1, **caractérisé en ce que** le capteur de température (5) peut être monté dans la section de trempe et de refroidissement (3) de manière à effectuer un mouvement de va-et-vient parallèle à la surface de la plaque de verre (7) et il est utilisé pour balayer la surface de la plaque de verre (7) par un mouvement de va-et-vient pendant le fonctionnement afin de recueillir la température de surface de la plaque de verre (7) dans une région de la plaque de verre couverte par une plage de balayage.

5. Procédé de trempe et de refroidissement selon la revendication 1, **caractérisé en ce que** le capteur de température (5) est monté sur les refroidisseurs.

6. Procédé de trempe et de refroidissement selon la revendication 1, **caractérisé en ce que** le capteur de température (5) est une unité de mesure de température par infrarouge.
